# EUROPÄISCHE PATENTSCHRIFT

(11) **EP 3 313 585 B1**
(45) Veröffentlichungstag und Bekanntmachung des Hinweises auf die Patenterteilung: **03.08.2022**
(21) Anmeldenummer: 16730332.0
(22) Anmeldetag: 14.06.2016
(51) Int. Cl.: B05B 12/14

(54) **MOLCH FÜR EINE BESCHICHTUNGSVORRICHTUNG SOWIE BESCHICHTUNGSANLAGE**
PIG FOR A COATING DEVICE, AND COATING SYSTEM
PISTON RACLEUR POUR DISPOSITIF DE REVÊTEMENT ET INSTALLATION DE REVÊTEMENT

(30) Priorität: 29.06.2015 DE 102015008216
(43) Veröffentlichungstag der Anmeldung: 02.05.2018
(73) Patentinhaber: Eisenmann SE, 71032 Böblingen (DE)
(72) Erfinder: SCHWAB, Stephan, 71111 Waldenbuch (DE)
(74) Vertreter: Ostertag & Partner Patentanwälte mbB
(86) Internationale Anmeldenummer: PCT/EP2016/063586
(87) Internationale Veröffentlichungsnummer: WO 2017/001186

(56) Entgegenhaltungen:
- EP-A1- 1 314 480
- WO-A1-2015/101676
- CN-A- 104 613 320
- DE-A1-102006 035 258
- US-A1- 2012 118 085

## Beschreibung

Beschichtungsanlagen für Gegenstände wie beispielsweise Fahrzeugkarosserien werden heutzutage oftmals molchbar ausgelegt. Molchsysteme erlauben einerseits eine Trennung direkt aufeinanderfolgender Beschichtungsmaterialien und können für die Reinigung und/oder Inspektion des Rohrleitungssystems eingesetzt werden. In der Beschichtungstechnik ist es allgemein bekannt, Beschichtungsmaterial mit Hilfe eines Molches durch eine Leitung beispielsweise von einer Versorgungsquelle an einen anderen Ort, insbesondere zu einer Applikationseinrichtung, zu fördern. Andererseits kann der Molch auch alleine beispielsweise zur Reinigung der Leitung verfahren werden. Die Bewegungen des Molches, insbesondere in Anwesenheit an verschiedenen Molchstationen, werden mit Hilfe von Einrichtungen überwacht.

In der DE 10 2007 054 969 A1 wird eine derartige Überwachungseinrichtung beschrieben. Die Grundidee dabei ist, einen Magneten in einen Molch zu integrieren und die Anwesenheit eines Molchs beispielsweise in einer Molchstation mit Hilfe eines Magnetfeld-empfindlichen Sensors zu erkennen. Wird eine Vielzahl von Sensoren in Bewegungsrichtung des Molchs hintereinander entlang des Wegs, den der Molch innerhalb einer Leitung nimmt, angeordnet, kann beim Durchfahren in jedem dieser Sensoren ein Sensorsignal erzeugt werden. Auf diese Weise kann der Molch entlang des Weges verfolgt werden und Ort und Geschwindigkeit des Molchs bestimmt werden.

Diese Art der Detektion des Aufenthaltsorts des Molchs mittels Magneten weist jedoch Nachteile auf: Die Ortung ist nur an vorher festgelegten Sensorstellen des Leitungssystems möglich. Findet sich der Molch nicht im Einzugsbereich einer solchen Sensorstation, ist eine Aussage über den Aufenthaltsort des Molchs nicht möglich. Die Einrichtung von Sensoren ist kostenaufwendig und muss mit der Auslegung des Leitungssystems geplant werden. Dazu kommt, dass die über den Magneten des Molchs transportierte Information sich lediglich auf den Ort und mittelbar die Geschwindigkeit sowie die Orientierung des Molchs beschränkt. Weitergehende Informationen sind über diese Technologie nicht kodierbar.

Die Druckschrift DE 10 2006 035 258 A1 beschreibt ein Verfahren zur Herstellung eines Putzkörpers für das Abreinigen von Innenwandungen von Rohren und/oder Schläuchen, aus schwammartigem oder zellfreiem elastischen Materialmit gegebenenfalls strukturierter Oberfläche, der durch Aufschäumen zumindest eines aufschäumbaren Materials hergestellt wird.

Die Druckschrift EP 1 314 480 A1 beschreibt ein Verfahren zur Farbversorgung eines Zerstäubers sowie einer Beschichtungsvorrichtung mittels eines Molches, bei welchen zur Reduzierung der Farbverluste der bei einem Farbwechsel im Farbrohr des Zerstäubers einer Beschichtungsanlage zurückbleibende Farblack mit einem Molch von der Farbdüse des Zerstäubers aus durch das Farbrohr hindurch in das Farbversorgungssystem zurückgedrückt wird.

Es ist eine Aufgabe der Erfindung, eine Beschichtungsanlage anzugeben, die kostengünstig herstellbar ist und eine höhere Informationsdichte als herkömmliche Systeme bietet.

Die Aufgabe wird durch eine Beschichtungsanlage sowie ein Verfahren zur Steuerung einer Beschichtungsanlage gemäß den unabhängigen Ansprüchen gelöst. Weitere Ausgestaltungen der Erfindung sind in den jeweiligen abhängigen Ansprüchen angegeben.

Die erfindungsgemäße Beschichtungsvorrichtung, insbesondere zur Beschichtung von Fahrzeugkarosserien, wobei die Beschichtungsvorrichtung ein molchbares Leitungssystem aufweist, gemäß dem Anspruch 1 weist einen RFID-Transponder auf, der dazu ausgelegt ist, Daten mittels der RFID-Technologie zu speichern und/oder zu senden und/oder zu empfangen. Ein RFID-Transponder ist ein vergleichsweise kleines Bauteil, das gut in die Geometrie eines Molchs integrierbar ist. Ein RFID-Transponder ist über größere Distanzen detektierbar und bietet die Möglichkeit, Informationen zu speichern. Die auf einem RFID-Transponder zu speichernden Informationen können beispielsweise an einer ersten Stelle auf den RFID-Transponder gespeichert und an einer zweiten Stelle ausgelesen werden. Die mittels eines RFID-Transponders mit dem Molch verknüpfbare Information weist eine wesentlich höhere Informationsdichte als die herkömmliche Magnettechnologie auf. Die mittels des RFID-Transponders mögliche Schreib-/Lesemöglichkeit erlaubt es, mit dem Molch zeitlich und räumlich verschiedene Informationen zu transportieren oder zu speichern bzw. auszulesen. Die RFID-Lese-Schreibvorrichtung ist dazu ausgelegt, die Daten, insbesondere Beschichtungsvorgangsdaten oder/und Beschichtungsmaterialdaten an einer ersten Molchstation auf den RFID-Transponder zu schreiben und/oder an einer zweiten Molchstation von dem RFID-Transponder zu lesen. Dies ermöglicht auf einfache und kostengünstige Weise einen Transport bzw. eine Weitergabe von Daten ohne ein zentralisiertes Datenverarbeitungssystem.

Gemäß einer bevorzugten Ausführungsform kann vorgesehen sein, dass die Daten molchspezifische Daten, insbesondere Daten über einen Ort und/oder eine Geschwindigkeit und/oder eine Identifikation und/oder eine Laufzeit und/oder eine Ausrichtung und/oder ein Herstellungsdatum und/oder ein Verfallsdatum und/oder eine Einsatzdauer und/oder eine Anzahl an Einsatzzyklen des Molchs umfassen. Es können also auf kostengünstige Weise die mit der herkömmlichen Technologie ebenfalls ermittelbaren Informationen wie Ort und/oder Geschwindigkeit ermittelt werden. Gleichzeitig bietet die erfindungsgemäße Technologie die Möglichkeit, eine Vielzahl weiterer molchspezifischer Daten mittels des RFID-Transponders zu ermitteln, zu speichern oder auszulesen. Dabei liegt ein besonderer Vorteil in der Tatsache, dass die Daten mittels des RFID-Transponders physisch mit dem Molch verknüpft sind. Es kann also ein Speichern und Auslesen der auf dem Molch gespeicherten Daten ohne ein zentralisiertes Datensystem erfolgen. Hieraus ergibt sich eine Vielzahl an Vorteilen. Beispielsweise kann die tatsächliche Verwendungsdauer eines Molchs bei einer Anwendung durch den Hersteller beispielsweise bei Geltendmachung von Garantieansprüchen überprüft werden. Dieselbe Information kann auch zur Beurteilung von der noch möglichen Restlebensdauer des Molchs hilfreich sein. In diesem Zusammenhang kann es auch von Interesse sein, wenn die Daten eine eindeutige Identifikation des Molchs ermöglichen. Die Identifikation kann beispielsweise eine eindeutige Fertigungskennzeichnung sein, die dem Molch mit Herstellung eingespeichert wird. Alternativ oder zusätzlich kann auch mit Einbringen des Molchs in die Beschichtungsvorrichtung oder mit einem ersten Erkennen des Molchs oder zu einem anderen geeigneten Zeitpunkt eine für die Beschichtungsvorrichtung und/oder für den Beschichtungsvorgang eindeutige Kennung des Molchs zu vergeben und gegebenenfalls auf dem Molch zu speichern.

Bei einer weiteren vorteilhaften Ausführungsform kann zusätzlich oder alternativ vorgesehen sein, dass die Daten beschichtungsspezifische Daten, insbesondere Beschichtungsvorgangsdaten und/oder Beschichtungsmaterialdaten umfassen. Es können also neben oder alternativ zu Daten, die vorrangig das Bauteil Molch an sich betreffen, Daten abgelegt und ausgelesen werden, die das mit dem Molch in Kontakt tretende Material betreffen. Dies können beispielsweise Materialdaten sein, die eine Identifikation des Materials an sich ermöglichen oder physikalische/chemische Eigenschaften des Materials angeben. Zusätzlich oder alternativ können auf dem Molch Daten gespeichert und ausgelesen werden, die zur Steuerung von Vorgängen verwendet werden können, bei denen das mit dem Molch in Kontakt tretende Material eingesetzt wird. Beispielsweise können bei einer Beförderung von Beschichtungsmaterial durch den Molch für die Applikation des Materials notwendige Daten auf dem RFID-Transponder abgelegt und ausgelesen werden.

Zusätzlich oder alternativ können bei einer bevorzugten Ausführungsform die Daten gegenstandsspezifische Daten, insbesondere Fahrzeugkarosseriedaten, umfassen. Daten, die Aussagen über den zu beschichtenden Gegenstand bieten, können ebenfalls beispielsweise bei der Applikation des Beschichtungsmaterials von Relevanz sein.

Insgesamt bietet die Integration eines RFID-Transponders in einen Molch eine Reihe von Vorteilen. Einerseits können Daten durchgängig von der Ankunft des Beschichtungsmaterials und/oder des zu beschichtenden Gegenstands in oder bei der Beschichtungsvorrichtung durch den RFID-Transponder in den Molch aufgenommen, zwischengespeichert und nach einem Auslesen weitergegeben werden. Dies ermöglicht eine Durchgängigkeit des Informationsflusses, so dass ohne ein zentralisiertes Datensystem mit der ihm innewohnenden Komplexität und Fehleranfälligkeit auf zuverlässige und einfache Weise ein Datenübergang vom Rohmaterial oder Halbzeug zum fertigen Produkt erzielt werden kann. Gleichzeitig ist es möglich, den Molch direkt betreffende Daten direkt an oder in dem Molch abzulegen und zu speichern, ohne eine zentralisierte Datenstruktur aufbauen zu müssen. Ein weiterer Vorteil besteht darin, den Molch mittels der RFID-Technologie zu detektieren. Dies wird nachfolgend unter Bezugnahme auf eine erfindungsgemäße Beschichtungsanlage näher erläutert.

Die erfindungsgemäße Beschichtungsanlage zur Beschichtung eines Gegenstands mit einem Beschichtungsmaterial weist eine Applikationseinrichtung zur Aufbringung des Beschichtungsmaterials auf den Gegenstand, ein molchbares Leitungssystem zur Versorgung der Applikationseinrichtung mit dem Beschichtungsmaterial sowie einen erfindungsgemäßen Molch auf. Mittels des Molchs ist es möglich, einen durchgängigen Datenfluss von dem Beschichtungsmaterial beispielsweise zu der Applikationseinrichtung oder/und zu dem zu beschichtenden oder beschichteten Gegenstand zu realisieren.

Gemäß einer vorteilhaften Ausführungsform weist die Beschichtungsanlage eine RFID-Lese-Schreibvorrichtung auf, die dazu ausgelegt ist, mit dem RFID-Transponder zu kommunizieren. Mit dem Begriff RFID-Lese-Schreibvorrichtung soll eine Vorrichtung umfasst sein, die nur lesen, die nur schreiben oder die sowohl lesen als auch schreiben kann. Entsprechend soll mit dem Begriff "kommunizieren" eine unidirektionale als auch eine bidirektionale Kommunikation umfasst sein.

Des weiteren kann vorteilhafterweise vorgesehen sein, dass die RFID-Lese-Schreibvorrichtung dazu ausgelegt ist, aus einem von dem RFID-Transponder ausgesendeten Signal Ort und/oder Geschwindigkeit des Molchs zu bestimmen. Dazu kann die RFID-Lese-Schreibvorrichtung mit einer oder mit mehreren geeigneten Antennen zum Auffangen des Signals ausgestattet sein. Die so erfassten Orts- und/oder Geschwindigkeitsdaten des Molchs können wiederum auf dem RFID-Transponder abgelegt werden. Eine Antenne kann in geeigneter Weise in der Nähe des Leitungssystems angeordnet sein, das von dem Molch durchfahren wird. Beispielsweise können der Anbringungsort und die Ausrichtung der Antenne so gewählt sein, dass nur ein bestimmter begrenzter Leitungsabschnitt erfasst wird. Dies realisiert eine Selektivität der Erfassung des RFID-Signals und könnte beispielsweise durch Ausrichten des Erfassungsbereichs senkrecht zum Leitungsverlauf erzielt werden. Alternativ können Anbringungsort und Ausrichtung der Antenne so gewählt werden, dass der Erfassungsbereich der Antenne parallel zum Leitungsverlauf und damit auch zur Bewegungsrichtung des RFID-Transponders ausgerichtet ist. Dies erlaubt beispielsweise eine Mehrfacherfassung eines RFID-Signals mit einer Antenne und damit gegebenenfalls eine erleichterte Geschwindigkeitsbestimmung eines Molchs.

Die Antenne kann beispielsweise um eine Leitung herum angeordnet sein, beispielsweise gewickelt, etwa als Spirale. Alternativ oder zusätzlich kann die Antenne fest mit dem Leitungsmaterial verbunden oder in das Leitungsmaterial eingearbeitet sein. Handelt es sich bei der Leitung um einen Schlauch mit einer Gewebestruktur, kann die Antenne in das Schlauchgewebe integriert sein. Je nach Anwendungsfall können unterschiedliche Geometrien für die Antenne zum Einsatz kommen.

Bei einer vorteilhaften Ausgestaltung der Beschichtungsanlage kann eine Steuervorrichtung vorgesehen sein, die dazu ausgelegt ist, die Applikationseinrichtung in Abhängigkeit von den Daten anzusteuern. Dabei können die mittels der RFID-Technologie auf dem RFID-Transponder gespeicherten Daten beispielsweise zur Verifikation der über ein anderes Informationssystem der Applikationseinrichtung zugeführten Daten dienen.

Der erfindungsgemäße Gedanke wird auch durch ein Verfahren zur Steuerung einer Beschichtungsanlage realisiert. Das erfindungsgemäße Verfahren weist die Schritte auf:
Speichern von beschichtungsrelevanten Daten mittels RFID-Technologie auf einen Molch an einer ersten Molchstation; Bewegen des Molchs von der ersten Molchstation zu eine zweiten Molchstation; Lesen der auf dem Molch befindlichen Daten mittels RFID-Technologie an der zweiten Molchstation; Ansteuern der Applikationseinrichtung mit den gelesenen Daten.

Bei einer bevorzugten Ausführungsform des Verfahrens umfasst das Steuern der Applikationseinrichtung ein Verifizieren der gelesenen Daten mit weiteren von der Steuereinrichtung bereitgestellten beschichtungsrelevanten Daten.

Die Erfindung wird nun unter Bezugnahme auf die Zeichnungen näher erläutert. Es zeigen:
- Figur 1: einen Ausschnitt aus einem molchbaren Leitungssystem einer erfindungsgemäßen Beschichtungsanlage mit einem erfindungsgemäßen Molch; und
- Figur 2: eine schematische Darstellung zur Erläuterung der Arbeitsweise einer erfindungsgemäßen Beschichtungsanlage.

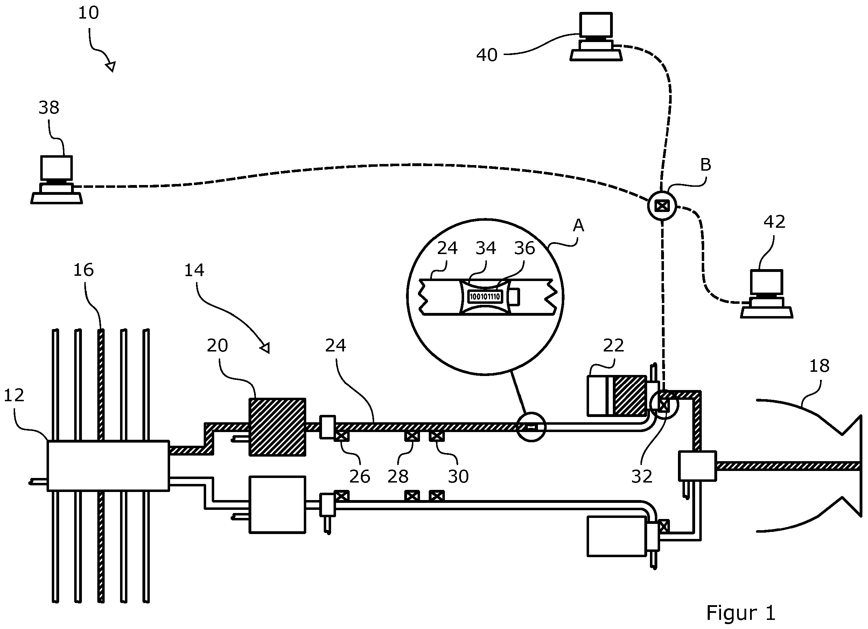

Figur 1 zeigt in einer schematischen Darstellung einen Ausschnitt aus einer Beschichtungsanlage 10. Die Beschichtungsanlage 10 umfasst einen Farbwechsler 12 und verschiedene an den Farbwechsler angebundene Leitungselemente 14, auf die hier nicht in aller Einzelheit eingegangen werden soll. Beschichtungsmaterial 16 wird von einem in Figur 1 nicht abgebildeten Beschichtungsmaterialbehälter dem Farbwechsler 12 zugeführt. Das Beschichtungsmaterial 16 wird über die genannten Leitungs- und Beschichtungsanlagenelemente 14 in dem dargestellten Ausführungsbeispiel einem Rotationszerstäuber 18 zugeführt. Innerhalb des Leitungssystems 14 sind eine erste Molchstation 20 und eine zweite Molchstation 22 vorgesehen. Entlang einer von der ersten Molchstation 20 zu der zweiten Molchstation 22 führenden Versorgungsleitung 24 sind mehrere Schreib-/Lesevorrichtungen 26-32 vorgesehen.

In der Versorgungsleitung 24 ist ein Molch 34 angeordnet. Der Molch 34 kann über die erste Molchstation 20 und/oder die zweite Molchstation 22 in das Leitungssystem, hier beispielsweise durch die Versorgungsleitung 24 dargestellt, eingebracht, in diesem bewegt werden und wieder entnommen werden. Der Molch 34 ist mit einem RFID-Transponder 36 versehen. Dies ist in dem vergrößerten Ausschnitt A dargestellt. Die Schreib-/Lesevorrichtung 32 ist - wie dies in dem Ausschnitt B dargestellt ist - mit mehreren, vorzugsweise mit allen, Einzelsteuerungen der Beschichtungsanlage 10 verbunden. In der vorliegenden Ausführungsform sind dies eine Materialversorgungssteuerung 38, eine Produktionssteuerung 40 und eine Applikationssteuerung 42.

Sowohl die Schreib-/Lesevorrichtung 32 als auch die Schreib-/Lesevorrichtungen 26-30 sind dazu eingerichtet, auf den RFID-Transponder 36 Daten zu schreiben als auch Daten und/oder Signale von dem RFID-Transponder 36 zu lesen. Dabei kann vorgesehen sein, dass jeder Schreib-/Lesevorrichtung eine Antenne zugeordnet ist. Einzelne (gegebenenfalls auch alle) Schreib-/Lesevorrichtungen können zur ausschließlichen Lage-/Positionserkennung des RFID-Transponder 36 und damit auch des Molchs 34 ausgelegt sind. Vorzugsweise sind die an den Molchstationen 20, 22 angebrachten Schreib-/Lesevorrichtungen 26, 32 für eine bidirektionale Kommunikation ausgelegt, während die Schreib-/Lesevorrichtungen 28, 30 lediglich Detektionsfunktion besitzen und dementsprechend lediglich zur unidirektionalen Kommunikation ausgelegt sind.

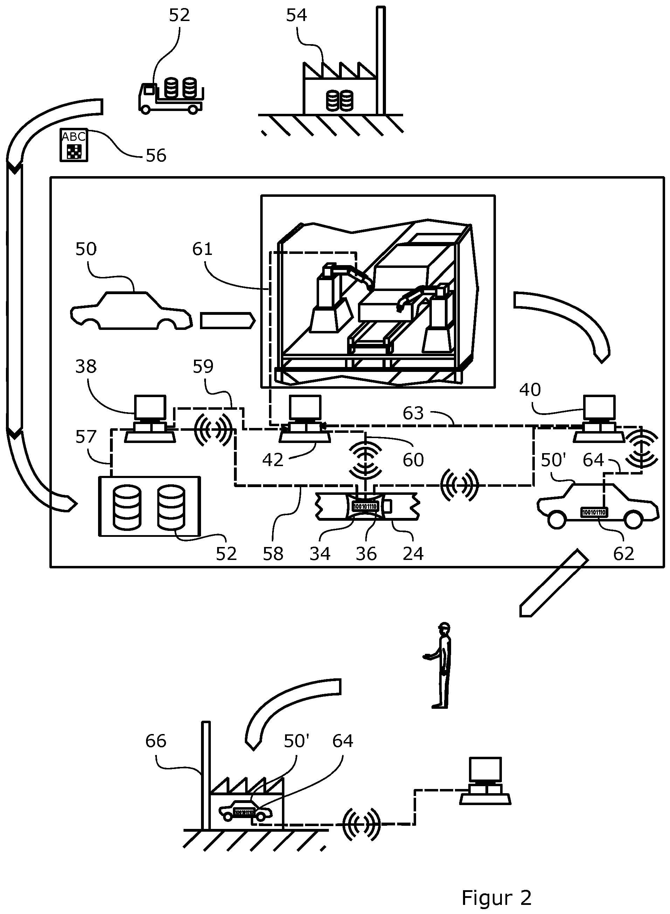

Figur 2 zeigt in einer schematischen Darstellung den Aufbau der Beschichtungsanlage 10 sowie weiterer mit der Beschichtungsanlage 10 verbundener Vorgänge. In der Darstellung der Figur 2 ist das eigentliche das Beschichtungsmaterial 16 führende Beschichtungssystem auf die Versorgungsleitung 24 mit dem darin befindlichen Molch 34 sowie dem RFID-Transponder 36 reduziert. Zur besseren Veranschaulichung der Funktionalität des RFID-Systems sind in der Figur 2 verschiedene Fertigungszustände eines zu beschichtenden Gegenstands, hier eine Fahrzeugkarosserie 50, sowie des für die Beschichtung verwendeten Beschichtungsmaterials, hier ein Karosserielack 16, veranschaulicht.

Bei dem zu beschichtenden Gegenstand kann es sich neben einer Fahrzeugkarosserie auch um einzelne Fahrzeugbestandteile oder andere zu beschichtenden Gegenstände handeln. Bei dem Beschichtungsmaterial kann es sich neben einem Lack auch um einen Klebstoff, eine Dichtmasse oder ähnliches handeln.

Der Lack 16 wird an einer von der Beschichtungsanlage 10 entfernten Fertigungsstätte 54 hergestellt und zu der Beschichtungsanlage 10 in einem Beschichtungsmaterialbehälter 52 verbracht. Daten, die das Beschichtungsmaterial, also hier den Karosserielack 16 betreffen sowie Hinweise für dessen Lagerung, Aufbereitung, Behandlung und/oder Applikation können beispielsweise auf einem Label 56 vermerkt sein, das an dem den Karosserielack 16 enthaltenden Behälter 52 angebracht sein kann. Mit Eintreffen des Beschichtungsmaterials 16 an der Beschichtungsanlage 10 oder zu einem anderen geeigneten Zeitpunkt werden die auf dem Label 56 befindlichen Informationen von der Materialversorgungssteuerung 38 erfasst. Die Erfassung der Daten kann beispielsweise durch ein optisches Lesen des Labels 56 erfolgen und ist in Figur 2 als Übertragungsweg 57 dargestellt. Selbstverständlich könnte an dieser Stelle auch bereits eine RFID-Datenübertragungstechnologie eingesetzt werden, mit Hilfe derer die Daten des Beschichtungsmaterials von einem entsprechend mit einem RFID-Transponder versehenen Label 56 zu der Materialversorgungssteuerung 38 übertragen werden können.

Die von dem Beschichtungsmaterial, also beispielsweise dem Lack 16, erhaltenen Informationen werden von der Materialversorgungssteuerung 38 mittels einer RFID-Übertragung an den Molch 34, respektive den RFID-Transponder 36, übertragen. Dies ist in der Figur 2 durch die gestrichelte Linie 58 dargestellt, die den RFID-Übertragungsweg symbolisiert.

Bei dem hier dargestellten RFID-Übertragungsvorgang und bei allen anderen genannten und beschriebenen RFID-Übertragungsvorgängen kann es sich je nach Anforderung um eine unidirektionale oder um eine bidirektionale Übertragung handeln.

Wird das Beschichtungsmaterial, also beispielsweise der Lack 16, über den Farbwechsler 12 in das Leitungssystem 14 der Beschichtungsanlage 10 eingebracht, kann der Molch 34 mittels des RFID-Transponders 36 Informationen über den Lack 16 transportieren, beispielsweise von der ersten Molchstation 20 zu der zweiten Molchstation 22.

Befindet sich die zweite Molchstation 22 in der Nähe des Rotationszerstäubers 18, kann der dorthin gelangte Molch 34 die auf dem RFID-Transponder 36 abgelegten Informationen der Applikationssteuerung 42 übermitteln, welche wiederum mit dem Rotationszerstäuber 18 oder allgemeiner mit dem Applikator 59 mittels einer Kommunikationsleitung 61 kommuniziert. Gleichzeitig oder alternativ kann die Applikationssteuerung 42 die bei der Applikation des Beschichtungsmaterials, also beispielsweise des Lacks 16, verwendeten Parameter auf den RFID-Transponder 36 übertragen. Dieser Übertragungsweg ist in Figur 2 als gestrichelte Linie 60 veranschaulicht.

Das Übertragen der Daten von dem RFID-Transponder 36 auf eine Schreib-/Lesevorrichtung und von einer Schreib-/Lesevorrichtung auf den RFID-Transponder 36 des Molchs 34 kann beispielsweise mit einer Produktionstaktung synchronisiert sein. Die bereits erwähnte Produktionssteuerung 40 kann einerseits ebenfalls mit einer Schreib-/Lesevorrichtung 32 wie in Figur 1 gezeigt und/oder mit der Materialversorgungssteuerung 38, der Applikationssteuerung 42 und/oder mit einer zentralen Steuerung verbunden sein. Dies wird durch den Übertragungsweg 59 zwischen der Materialversorgungsteuerung 38 und der Applikationssteuerung 42 sowie durch den Übertragungsweg 63 zwischen der Applikationssteuerung 42 und der Produktionssteuerung 40 veranschaulicht. Eine dediziert zentrale Steuerung ist in der in Figur 1 gezeigten Ausführungsform nicht dargestellt, deren Funktion kann beispielsweise durch die Produktionssteuerung 40 wahrgenommen werden.

Auf diese Weise hat die Produktionssteuerung Zugriff auf die in dem RFID-Transponder 36 abgelegten Daten und kann mit dieser Datenbasis - wie beispielshaft in Figur 2 dargestellt - die während des Beschichtungsprozesses in dem RFID-Transponder 36 angesammelten Daten auf die fertig beschichtete Fahrzeugkarosserie 50 und dort insbesondere ebenfalls auf einen RFID-Transponder 62 übertragen. Dies ist als RFID-Übertragungsweg 64 symbolhaft dargestellt.

Dabei können beispielweise die ursprünglich von dem Beschichtungsmaterialhersteller 54 übermittelten Daten wie beispielsweise die Farbe, das Beschichtungsmaterialsystem oder ähnliches als auch davon eventuell abweichende oder ergänzende Daten, die beispielsweise in der Materialversorgungssteuerung 38 erhoben wurden und sich beispielsweise auf ein tatsächliches Mischungsverhältnis, einen bei der Applikation verwendeten Druck, herrschende Luftdruck- und/oder Umgebungstemperaturverhältnisse oder ähnliches beziehen können, auf dem RFID-Transponder 62 abgelegt werden.

Das gleiche gilt für die Erfassung von applikationsspezifischen Daten durch die Applikationssteuerung 42. Diese können als Solldaten - d.h. als geplante Steuerdaten - auf dem Molch-RFID-Transponder 36 abgelegt und somit gleichsam zwischengespeichert werden. Gleichzeitig oder alternativ können auch tatsächlich bei der Applikation des Beschichtungsmaterials 16 erfasste Mess- oder Istdaten aufgenommen und auf dem Molch-RFID-Transponder 36 gespeichert werden.

Daneben können auch molchspezifische Daten an der Applikationssteuerung 42 oder der Materialversorgungssteuerung 38 wie beispielsweise die Gesamtmolchlaufzeit, die Laufzeit eines Molchs im jeweiligen Applikationsvorgang, dessen Ausrichtung oder ähnliches erfasst werden. Diese können bei einem Auslesen der Daten an einer der Schreib-/Lesevorrichtungen 26-38 ausgelesen und der Produktionssteuerung 40 beispielsweise für eine vorbeugende Wartung, zur Erfassung von statistischen Daten und/oder zur Fehlererkennung übermittelt werden. So kann beispielsweise aus einer sich bei ansonsten gleichbleibenden Bedingungen verändernden Molchgeschwindigkeit oder Laufzeit auf einen möglichen Verschleiß des Molchs 34 geschlossen werden. Diese Übermittlung und Auswertung der Daten kann vorteilhafterweise unabhängig von einer zentralen Datenerfassung erfolgen, da alle molchrelevanten Daten auf dem Molch-RFID-Transponder 36 abgelegt und auslesbar sind.

Auf diese Weise können die Daten über das Beschichtungsmaterial 16 selbst und über den an der Fahrzeugkarosserie 50 durchgeführten Beschichtungsvorgang durchgängig ab dem Eintreffen des Beschichtungsmaterials 16 in der Beschichtungsanlage 10 bis zum Verlassen der Fahrzeugkarosserie 50, nun als Fahrzeug 50', erfasst und auf dem beschichteten Gegenstand selbst, beispielsweise in dem der Fahrzeugkarosserie 50 zugeordneten Transponder 64, erfasst und dezentral gespeichert bzw. weitergegeben werden.

Neben der vollständigen Durchgängigkeit der Beschichtungsanlage 10 hinsichtlich der Erfassung und Weitergabe von beschichtungsrelevanten Daten bietet die beschriebene RFIDbasierte Kommunikation die Möglichkeit zur einfachen und kostengünstigen Detektion des Molchs 34 mittels einer oder mehrerer Schreib-/Lesevorrichtungen 26-32. Durch die Wahl geeigneter Antennen und durch eine entsprechende Auswertung der RFID-Signale können sowohl der Ort als auch die Geschwindigkeit des Molchs 34 in dem Leitungssystem an den entsprechenden Schreib-/Lesevorrichtung 26-32 erfasst werden und damit für die entsprechenden Steuerungsvorgänge verwendet werden. Gleichzeitig können die erfassten Daten auf dem RFID-Transponder 36 des Molchs 34 abgelegt werden. Dies ermöglicht beispielsweise neben der Ermittlung der Anzahl an Zyklen, die der Molch 34 bereits zurückgelegt hat, auch die Erfassung möglicherweise verschleißrelevanter Geschwindigkeits- oder/und Materialdaten. Wird beispielsweise der Molch 34 zu einem vergleichsweise hohen Anteil mit Lösungsmitteln in Kontakt gebracht, könnte dies auf einen höheren Verschleiß des Molchs 34 hindeuten verglichen mit einem Kontakt mit chemisch weniger aggressiven Materialien. Ähnliches gilt für die mit dem Molch 34 gefahrenen Geschwindigkeitsprofile. Beispielsweise können höhere Geschwindigkeiten über einen längeren Zeitraum auf einen höheren Verschleiß des Molchs 34 hindeuten.

Nach der Fertigstellung des beschichteten Gegenstands kann in einer späteren Produktlebensphase auf die in dem RFID-Transponder gespeicherten Daten beispielsweise bei einem Reparaturvorgang zurückgegriffen werden. Ein solcher Fall ist in dem unteren Teil der Figur 2 dargestellt. An dem Fahrzeug 50' wird in einer Werkstatt 66 an der Beschichtung eine Reparatur vorgenommen. In einem solchen Fall kann nicht nur die Zusammensetzung des Beschichtungsmaterials 16 aus dem Transponder 62 der Fahrzeugs 50' ausgelesen werden, sondern die gesamte Historie der Beschichtungsmaterialapplikation wie beispielsweise Parameter des Beschichtungsvorgangs, ohne dass eine Schnittstelle zum Hersteller notwendig wäre. Mit diesen Daten kann die Reparaturbeschichtung wesentlich genauer an die Originalbeschichtung angepasst werden.

## Patentansprüche

1. Beschichtungsanlage (10) zur Beschichtung eines Gegenstands (50) mit einem Beschichtungsmaterial (16), mit
einer Applikationseinrichtung (18) zur Aufbringung des Beschichtungsmaterials (16) auf den Gegenstand (50),
einem molchbaren Leitungssystem (14) zur Versorgung der Applikationseinrichtung (18) mit dem Beschichtungsmaterial (16),
einem Molch (34), wobei die Beschichtungsanlage (10) das molchbare Leitungssystem (14) aufweist, wobei der Molch (34) einen RFID-Transponder (36) aufweist, der dazu ausgelegt ist, Daten mittels der RFID-Technologie zu speichern und/oder zu senden und/oder zu empfangen, mit einer RFID-Lese-Schreibvorrichtung (26-32), die dazu ausgelegt ist, mit dem RFID-Transponder (36) zu kommunizieren, **dadurch gekennzeichnet, dass** die RFID-Lese-Schreibvorrichtung (26-32) dazu ausgelegt ist, die Daten an einer ersten Molchstation (20) auf den RFID-Transponder (36) zu schreiben und/oder an einer zweiten Molchstation (22) von dem RFID-Transponder (36) zu lesen.

2. Beschichtungsanlage nach Anspruch 1, wobei die RFID-Lese-Schreibvorrichtung (32) dazu ausgelegt ist, aus einem von dem RFID-Transponder (36) ausgesendeten Signal Ort und/oder Geschwindigkeit des Molchs (34) zu bestimmen.

3. Beschichtungsanlage nach einem der vorhergehenden Ansprüche, mit einer Steuervorrichtung (42), die dazu ausgelegt ist, die Applikationseinrichtung (18) in Abhängigkeit von den Daten anzusteuern.

4. Beschichtungsanlage nach einem der vorhergehenden Ansprüche, welche zur Beschichtung von Fahrzeugkarosserien (50) ausgebildet ist.

5. Verfahren zur Steuerung einer Beschichtungsanlage nach einem der Ansprüche 1 bis 4, mit den Schritten:
Speichern von beschichtungsrelevanten Daten mittels RFID-Technologie auf einem Molch an einer ersten Molchstation;
Bewegen des Molchs von der ersten Molchstation zu einer zweiten Molchstation;
Lesen der auf dem Molch befindlichen Daten mittels RFID-Technologie an der zweiten Molchstation;
Ansteuern der Applikationseinrichtung mit den gelesenen Daten.

6. Verfahren nach Anspruch 5,
wobei das Steuern der Applikationseinrichtung ein Verifizieren der gelesenen Daten mit weiteren von der Steuereinrichtung bereitgestellten beschichtungsrelevanten Daten umfasst.

## Claims

1. A coating system (10) for coating an item (50) with a coating material (16), with
an application device (18) for applying the coating material (16) to the item (50),
a piggable line system (14) for supplying the application device (18) with the coating material (16),
a pig (34), wherein the coating system comprises the piggable line system (14), wherein the pig (34) has an RFID transponder (36), which is designed to store and/or to send and/or to receive data by means of RFID technology with an RFID reading/writing device (26-32) which is designed to communicate with the RFID transponder (36), **characterized in that** the RFID reading/writing device (32) is designed to write the data onto the RFID transponder (36) at a first pigging station (20) and/or to read the data from the RFID transponder (36) at a second pigging station (22).

2. The coating system as claimed in claim 1, wherein the RFID reading/writing device (32) is designed to determine the location and/or speed of the pig (34) from a signal emitted by the RFID transponder (36).

3. The coating system as claimed in one of the preceding claims, with a control device (42), which is designed to activate the application device (18) in dependence on the data.

4. The coating system as claimed in one of the preceding claims, which adapted to the coating of vehicle bodies (50).

5. A method for controlling a coating system as claimed in one of claims 1 to 4, with the steps of:
storing coating-relevant data by means of RFID technology on a pig at a first pigging station;
moving the pig from the first pigging station to a second pigging station;
reading the data located on the pig by means of RFID technology at the second pigging station;
activating the application device with the data read.

6. The method as claimed in claim 5, wherein controlling the application device comprises verifying the data read with further coating-relevant data provided by the control device.

## Revendications

1. Installation de revêtement (10) destinée au revêtement d'un objet (50) avec une matière de revêtement (16), comportant
un dispositif d'application (18) pour appliquer la matière de revêtement (16) sur l'objet (50),
un réseau de conduites (14), aptes à recevoir un piston racleur, pour alimenter le dispositif d'application (18) avec une matière de revêtement (16),
un piston racleur (34), dans lequel l'installation de revêtement (10) comporte le réseau de conduites (14), aptes à recevoir un piston racleur, dans lequel le piston racleur (34) présente un transpondeur RFID (36), qui est conçue pour enregistrer et / ou envoyer et / ou recevoir des données au moyen de la technologie RFID, avec un dispositif RFID de lecture - écriture (26 à 32), qui est conçu pour communiquer avec le transpondeur RFID (36), **caractérisé en ce que** le dispositif RFID de lecture - écriture (26 à 32) est conçu pour écrire les données à une première station de piston racleur (20) sur le transpondeur RFID (36), et / ou pour les lire à une seconde station de piston racleur (22) à partir du transpondeur RFID (36).

2. Installation de revêtement selon la revendication 1, dans lequel le dispositif RFID de lecture - écriture (32) est conçu pour déterminer le lieu et / ou la vitesse du piston racleur (34) à partir d'un signal émis du transpondeur RFID (36).

3. Installation de revêtement selon l'une quelconque des revendications précédentes comportant un dispositif de commande (42), qui est conçu pour commander le dispositif d'application (18) en fonction des données.

4. Installation de revêtement selon l'une quelconque des revendications précédentes qui est configuré pour le revêtement de carrosseries de véhicules (50).

5. Procédure de commande d'une installation de revêtement selon l'une quelconque des revendications 1 à 4, comportant les étapes suivantes:
enregistrement des données pertinentes pour le revêtement à l'aide de la technologie RFID sur un piston racleur à une première station de piston racleur;
déplacement du piston racleur de la première station de piston racleur à une seconde station de piston racleur;
lecture des données présentes sur le piston racleur au moyen de la technologie RFID à la seconde station de piston racleur;
commande du dispositif d'application avec les données lues.

6. Procédé selon la revendication 5,
dans lequel la commande du dispositif d'application comporte une vérification des données lues avec d'autres données pertinentes pour le revêtement fournies par le dispositif de commande.
